# EUROPÄISCHE PATENTSCHRIFT

(11) **EP 0 751 378 B1**
(45) Veröffentlichungstag und Bekanntmachung des Hinweises auf die Patenterteilung: **18.12.2002**
(21) Anmeldenummer: 96102870.1
(22) Anmeldetag: 27.02.1996
(51) Int. Cl.: G01F 1/78, G01F 1/72, F02D 41/18, G01P 5/12, G01P 13/04, G01F 1/698, G01F 1/69

(54) **Vorrichtung zur Bestimmung des Luftmassenstromes**
Device for air mass flow determination
Dispositif pour la détermination du débit massique de l'air

(30) Priorität: 29.06.1995 DE 19523701
(43) Veröffentlichungstag der Anmeldung: 02.01.1997
(73) Patentinhaber: Pierburg GmbH, 41460 Neuss (DE)
(72) Erfinder: Wienecke, Thomas, 41564 Kaarst (DE); Schmitt, Ralf, 41464 Neuss (DE); Lösing, Karl-Heinrich, Dr., 46519 Alpen (DE); Liedtke, Günter, 45239 Essen (DE)

(56) Entgegenhaltungen:
- DE-A- 3 135 793
- DE-A- 3 935 778
- FR-A- 2 599 153
- US-A- 5 263 369
- PATENT ABSTRACTS OF JAPAN vol. 95, no. 4, 31.Mai 1995 & JP 07 005009 A (HITACHI LTD)
- PATENT ABSTRACTS OF JAPAN vol. 014, no. 376 (P-1092), 14.August 1990 & JP 02 141623 A (JAPAN ELECTRON CONTROL SYST CO LTD)

## Beschreibung

Die Erfindung betrifft eine Vorrichtung zur Bestimmung des Luftmassenstromes in einem Ansaugkanal einer Brennkraftmaschine, bestehend aus einem Ansaugkanalabschnittgehäuse, in dem auf einem Träger in Strömungsrichtung hintereinander ein Temperaturmeßelement und ein thermischer Massenstromsensor angeordnet sind.

Eine derartige Vorrichtung ist beispielsweise aus der DE-C2-31 35 793 bekannt, in der das Problem behandelt wird: Bei der Messung der von einer Brennkraftmaschine angesaugten Luftmasse weist das Meßsignal einen Fehler auf, der darauf beruht, daß die Vorrichtung auch die Masse der infolge der Pulsation im Ansaugrohr der Brennkraftmaschine zurückströmenden Luft ermittelt.

In dieser Schrift sind Mittel angegeben, mit denen das die strömende Mediummasse darstellende Meßsignal in Abhängigkeit von der Strömungsrichtung mittels eines Strömungsrichtungsgebers derart beeinflußbar ist, daß das Meßsignal während einer entgegen der gewünschten Strömungsrichtung des Mediums verlaufenden Strömung unterdrückt wird. Hierbei weist der Strömungsrichtungsgeber einen ersten temperaturabhängigen Indikationswiderstand auf, der an einem Träger angeordnet ist und dessen Widerstandswert durch eine Widerstandsmeßschaltung erfaßt und mit einem durch eine weitere Widerstandsmeßschaltung erfaßten Widerstandswert eines in Strömungsrichtung mit Abstand zum ersten Indikationswiderstand angeordneten zweiten temperaturabhängigen Indikationswiderstand verglichen wird, wobei die Differenz der Widerstandswerte zur Beeinflussung des Meßsignals dient. Hierfür ist ein erheblicher Schaltungs- und Bauteileaufwand zu betreiben.

Hiervon ausgehend liegt der Erfindung die Aufgabe zugrunde, die gattungsgemäße Vorrichtung derart zu gestalten, daß bei verringertem Bauteileaufwand eine Kompensation des durch Pulsation verursachten Meßsignalfehlers erreichbar wird.

Diese Aufgabe ist durch die im Anspruch 1 angegebenen Merkmale gelöst worden. Vorteilhafte Weiterbildungen sind mit den Unteransprüchen angegeben.

Die Erfindung basiert auf der Erkenntnis, daß an einem angeströmten Körper bei laminarer Umströmung an dem der Strömung entgegengerichteten Ende des umströmten Körpers ein größerer Wärmeübergang in das strömende Medium stattfindet als an dem der Strömung abgewandten Ende des Körpers. Hiervon macht die Erfindung Gebrauch.

Mit der Erfindung liegt ein sehr einfach auszuführender Vorschlag vor, der gegenüber dem Stand der Technik mit weniger Bauteilen realisiert werden kann und auch bezüglich des Schaltungsaufbaus sehr einfach ist.

Ein Ausführungsbeispiel der Erfindung ist in der Zeichnung dargestellt und wird nachfolgend beschrieben.

Diese zeigt:
- **Fig. 1**: eine schematische Darstellung einer erfinderischen Vorrichtung zur Bestimmung des Luftmassenstromes;
- **Fig. 2**: eine Alternative Ausbildung nach Fig. 1;
- **Fig. 3**: eine Prinzipschaltung der Vorrichtung nach Fig. 1,
- **Fig. 4**: ein Diagramm mit Kennlinie des Luftmassenstromes über dem Ausgangssignal mit und ohne die erfinderischen Merkmale.

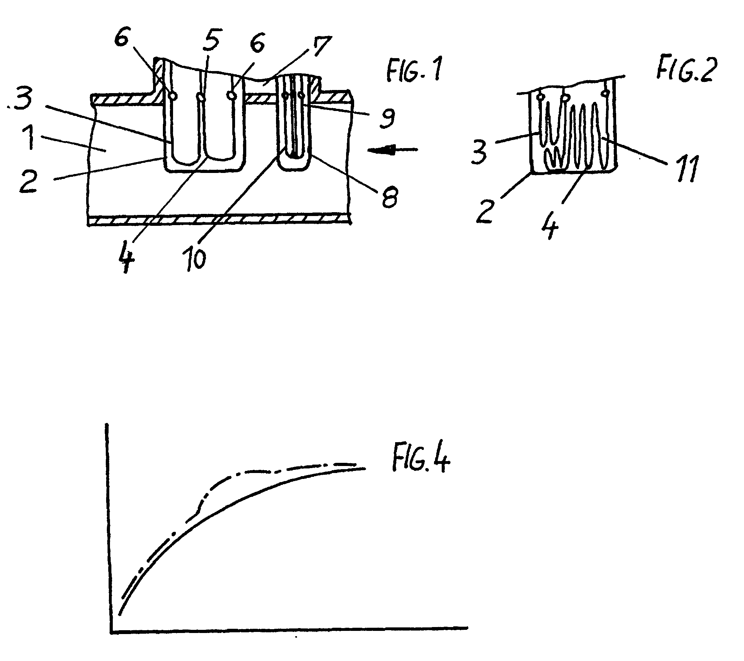

Fig. 1 zeigt einen Ansaugkanalabschnitt 1 einer Brennkraftmaschine mit einem ersten Träger 2, auf dem zwei mäanderförmig ausgebildete Massenstromsensoren 3, 4 in Luftströmungsrichtung hintereinander angeordnet sind und mit ihren Endanschlüssen 5 verbunden und an Masse gelegt sind.
Eingangsanschlüsse 6 der Massenstromsensoren 3, 4 sind mit einer Schaltung 7 verbunden, die nachfolgend beschrieben wird.
Auf einem weiteren Träger 8 sind zwei Temperatursensoren 9, 10 angeordnet, die ebenfalls Teil der Schaltung 7 sind. Dieser Träger 8 ist mit Abstand zum anderen Träger 2 angeordnet, wodurch eine direkte Anströmung des ersten Trägers 2 wie bei einer Rückströmung auch bei Vorströmung erreicht wird.

Fig. 2 zeigt eine alternative Ausbildung des ersten Trägers 2, d. h. dieser weist für den Massenstromsensor 4, der überwiegend der Rückströmung ausgesetzt ist, einen größeren Flächenteil 11 als für den anderen Massenstromsensor 3 auf. Diese Maßnahme dient der Kompensation einer geringeren Rückströmgeschwindigkeit bzw. einer nicht direkten Anströmung bei Wirbelbildung.

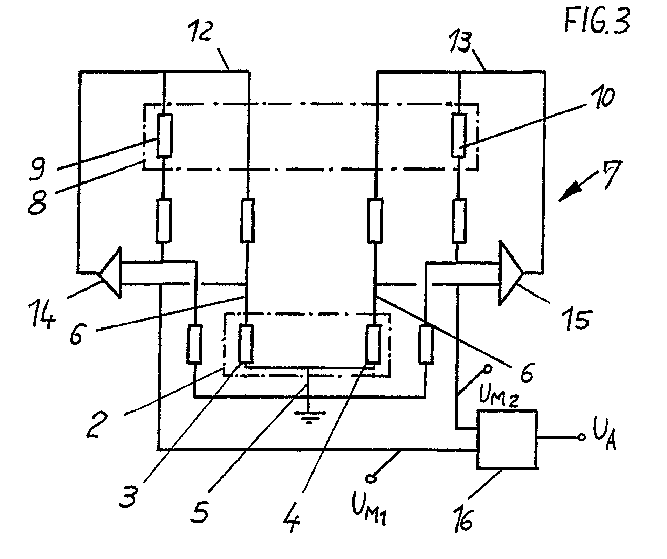

Fig. 3 zeigt die Prinzipschaltung 7. Diese Schaltung 7 besteht aus den zwei Massenstromsensoren 3, 4 die auf dem Träger 2 angeordnet sind, der dem Luftstrom ausgesetzt ist. Die Massenstromsensoren 3, 4 sind mit ihren Endanschlüssen 5 verbunden und an Masse gelegt.

Jeder Massenstromsensor 3, 4 ist in einer Brückenschaltung 12, 13 mit dem Ausgangsstrom eines Regelverstärkers 14, 15 beaufschlagt, wobei in jeweils einem Brückenzweig die Temperatursensoren 9, 10 angeordnet sind, d. h. diese sind auf dem anderen Träger 8 angeordnet und ebenfalls dem Luftstrom ausgesetzt.

Die an den Eingangsanschlüssen 6 der beiden Massenstromsensoren 3, 4 anliegenden Spannungen U_{M1}, U_{M2} werden einer elektrischen Schaltung 16 zugeführt und in dieser nach der Formel U_{A} = U_{M2} + K (U_{M1} - U_{M2}) U_{M2} umgeformt, wobei U_{A} das Ausgangssignal der Vorrichtung ist, das in einem nicht dargestellten elektronischen Steuergerät der Brennkraftmaschine weiterverarbeitet werden kann und dem Luftmassendurchsatz entspricht. Der Formelwert K ist ein beliebig wählbarer Faktor, der zur Anpassung der Vorrichtung an diverse Motoren dient. Es hat sich als vorteilhaft herausgestellt, wenn der Wert K (U_{M1} - U_{M2}) auf in Abhängigkeit von U_{M1}, U_{M2} festgelegte Höchstwerte beschränkt wird, um eine Überkompensation zu vermeiden.

Es kann vorgesehen sein, daß der Luftmassenstromsensor 4, der überwiegend von der Rückströmung der Luft beaufschlagt ist, einen größeren Flächenanteil des Trägers 2 einnimmt als der andere, womit einer geringeren Rückströmgeschwindigkeit entsprochen wird. Es kann darüber hinaus vorgesehen werden, daß dieser Luftmassensensor 4 einen kleineren Widerstandswert aufweist als der andere und/oder auch einen anderen, z. B. höheren Arbeitstemperaturbereich aufweist.

Eine beispielhafte Berechnung des U_{A}-Wertes nach der Formel
U_{A} = U_{M2} + K (U_{M1} - U_{M2}) U_{M2} bei Vorströmung mit willkürlich gewählten Werten
U_{M1} = 5
U_{M2} = 2 ergibt
U_{A} = 2 + 1 (5 - 2) 2
U_{A} = 2 + 6
U_{A} = 8
und bei Rückströmung mit den Werten
U_{M1} = 5
U_{M2} = 10 ergibt
U_{A} = 10 + 1 (5 - 10) 10
U_{A} = 10 - 50
U_{A} = -40

Damit liegen für die weitere Verarbeitung des U_{A}-Wertes in dem Steuergerät eindeutige Werte für Vor- und Rückströmung vor.

Fig. 4 zeigt ein Diagramm, aus dem Kennlinien des Luftmassenstromes über dem Ausgangssignal des Massenstromsensors erkennbar sind, wobei die Vollinie für einen erfindungsgemäßen Massenstromsensor gilt und die Strichpunktlinie für einen des Standes der Technik, d. h. ohne Kompensation der Rückströmung. Aus letzterer läßt sich unschwer erkennen, daß im Vergleich zu der Vollinie Betriebebereiche mit Rückströmung vorliegen, und zwar durch Ausschläge der Strichpunktlinie.

## Patentansprüche

1. Vorrichtung zur Bestimmung des Luftmassenstromes in einem Ansaugkanal einer Brennkraftmaschine, bestehend aus einem Ansaugkanalabschnittgehäuse, in dem auf einem Träger (2) ein thermischer Massenstromsensor (3) angeordnet ist, der durch den Ausgangsstrom eines Regelverstärkers (14) beheizt wird, **dadurch gekennzeichnet,**
**daß** auf dem Träger (2) ein zweiter Massenstromsensor (4) in Luftströmungsrichtung hinter dem ersten angeordnet ist, wobei jeder Massenstromsensor (3, 4) in einer Brückenschaltung mit dem Ausgangsstrom eines Regelverstärkers (14, 15) beaufschlagt ist und in jeweils einem Brückenzweig Temperatursensoren (9, 10) angeordnet sind, die auf einem weiteren Träger (8) angeordnet und der Luftströmung ausgesetzt sind, der mit Abstand zum ersten Träger (2) angeordnet ist, daß die an den Eingangsanschlüssen (6) der beiden Massenstromsensoren (3, 4) anliegenden Spannungen U_{M1}, U_{M2} einer elektronischen Schaltung (16) zugeführt werden und in dieser nach der Formel U_{A} = U_{M1} + K (U_{M1} - U_{M2}) U_{M2} umgeformt werden, wobei der Wert U_{A} das Ausgangssignal der Vorrichtung für den Luftmassendurchsatz und K ein Anpassungsfaktor ist.

2. Vorrichtung nach Anspruch 1, **dadurch gekennzeichnet, daß** der Wert K (U_{M1} - U_{M2}) auf in Abhängigkeit von U_{M1}, U_{M2} festgelegte Höchstwerte beschränkt wird, um eine Überkompensation zu vermeiden.

3. Vorrichtung nach Anspruch 1 oder 2, **dadurch gekennzeichnet, daß** der Massenstromsensor (4), der überwiegend von Rückströmung beaufschlagt ist, einen größeren Flächenteil (11) des Trägers (2) einnimmt als der andere.

4. Vorrichtung nach einem der vorstehenden Ansprüche, **dadurch gekennzeichnet, daß** der Massenstromsensor (4), der überwiegend von der Rückströmung beaufschlagt wird, einen kleineren Widerstandswert aufweist als der andere.

5. Vorrichtung nach einem der vorstehenden Ansprüche, **dadurch gekennzeichnet, daß** der Massenstromsensor (4), der überwiegend von der Rückströmung beaufschlagt wird, anderen Arbeitstemperaturbereich aufweist als der andere.

## Claims

1. Device for determining an air mass flow in an intake duct of a combustion engine, consisting of an intake duct section housing in which is arranged on a carrier (2) a thermal mass flow sensor (3) heated by the output current of a servo amplifier (14),
**characterised in that** on the carrier (2) is arranged a second mass flow sensor (4) behind the first in the direction of air flow, wherein to each mass flow sensor (3, 4) in a bridge circuit is applied the output current of a servo amplifier (14, 15), and temperature sensors (9, 10) are each arranged in a bridge branch and exposed to the air flow and arranged on a further carrier (8) which is arranged at a distance from the first carrier (2), that the voltages U_{M1}, U_{M2} present at the input connections (6) of the two mass flow sensors (3, 4) are supplied to an electronic circuit (16) and here converted following the formula U_{A} = U_{M1} + K (U_{M1} - U_{M2}) U_{M2} wherein the value U_{A} is the output signal of the device for the air mass throughput and K is an adaptation factor.

2. Device according to claim 1, **characterised in that** the value K (U_{M1} - U_{M2}) is restricted to maximum values established as a function of U_{M1}, U_{M2} in order to avoid overcompensation.

3. Device according to claim 1 or 2, **characterised in that** the mass flow sensor (4) which is mainly exposed to return flow takes up a larger surface part (11) of the carrier (2) than the other.

4. Device according to any of the previous claims,
**characterised in that** the mass flow sensor (4) which is mainly exposed to the return flow has a lower resistance value than the other.

5. Device according to any of the previous claims,
**characterised in that** the mass flow sensor (4) which is mainly exposed to the return flow has a different working temperature range from the other.

## Revendications

1. Dispositif pour la détermination du débit massique d'air dans un conduit d'admission d'un moteur à combustion interne, formé d'un carter de section de conduit d'admission dans lequel est disposé, sur un support (2), un capteur thermique de débit massique (3) chauffé par le courant de sortie d'un amplificateur de réglage (14),
**caractérisé en ce**
**qu'**un second capteur de débit massique (4) est disposé sur le support (2), en arrière du premier dans le sens d'écoulement d'air, chaque capteur de débit massique (3, 4) étant attaqué dans un montage en pont par le courant de sortie d'un amplificateur de réglage (14, 15) et des capteurs de température (9, 10), disposés chacun dans une branche du pont, étant disposés sur un autre support (8), qui est disposé à distance du premier support (2), et étant exposés à l'écoulement d'air,
**que** les tensions U_{M1}, U_{M2} appliquées au bornes d'entrée (6) des deux capteurs de débit massique (3, 4) sont transmises à un circuit électronique (16) et sont converties dans celui-ci suivant la formule U_{A} = U_{M1} + K (U_{M1} - U_{M2}) U_{M2}, la valeur U_{A} étant le signal de sortie du dispositif pour le débit massique d'air et K un coefficient d'adaptation.

2. Dispositif suivant la revendication 1, **caractérisé en ce que** la valeur K (U_{M1} - U_{M2}) est limitée à des valeurs maximales fixées en fonction de U_{M1}, U_{M2}, pour éviter une surcompensation.

3. Dispositif suivant l'une des revendications 1 et 2, **caractérisé en ce que** le capteur de débit massique (4) qui est principalement attaqué par l'écoulement de retour occupe une partie de surface (11) du support (2) plus grande que l'autre.

4. Dispositif suivant l'une des revendications précédentes, **caractérisé en ce que** le capteur de débit massique (4) qui est principalement attaqué par l'écoulement de retour présente une valeur de résistance plus petite que l'autre.

5. Dispositif suivant l'une des revendications précédentes, **caractérisé en ce que** le capteur de débit massique (4) qui est principalement attaqué par l'écoulement de retour présente une autre plage de température de travail que l'autre.
